# FASCICULE DE BREVET EUROPEEN

(11) **EP 2 655 063 B1**
(45) Date de publication et mention de la délivrance du brevet: **13.12.2017**
(21) Numéro de dépôt: 11815508.4
(22) Date de dépôt: 21.12.2011
(51) Int. Cl.: B32B 27/32, B65B 33/04, C09D 5/20

(54) **PROCÉDÉ DE PROTECTION DE SURFACES LAQUÉES**
SCHUTZVERFAHREN FÜR LACKIERTE OBERFLÄCHEN
PROCESS FOR PROTECTING PAINTED SURFACES

(30) Priorité: 23.12.2010 FR 1061190
(43) Date de publication de la demande: 30.10.2013
(73) Titulaire: Novacel, 76250 Deville-les-Rouen (FR)
(72) Inventeur: MASSON, Jean-Loup, F-76230 Bois-Guillaume (FR)
(74) Mandataire: Nevant, Marc
(86) Numéro de dépôt international: PCT/FR2011/053136
(87) Numéro de publication internationale: WO 2012/085466

(56) Documents cités:
- EP-A1- 1 264 682
- EP-A1- 1 582 342
- EP-A2- 0 592 913
- EP-A2- 0 768 354
- DE-A1- 19 532 220
- DE-A1-102004 062 323
- DE-A1-102005 055 913
- US-B1- 6 572 979
- "5001 (ISO 29862 - EN 1939) International Harmonized Test MEthod - Afera Test Method. Self Adhesive Tapes - Measurement of Peel Adhesion form Stainless Steel or from its own Backing", 1 October 2003 (2003-10-01), AFERA TEST METHODS MANUAL, 2008 EDITION,, PAGE(S) 7 - 18, XP001525964, [retrieved on 2008-02-01]

## Description

L'invention concerne le domaine de la protection temporaire de surface. Plus particulièrement, l'invention concerne un procédé pour la protection de surfaces laquées mettant en oeuvre un film de protection particulier.

Il existe à ce jour différents types de film permettant de protéger temporairement une surface. On peut citer notamment :
- des films laminés sur une surface pour prévenir l'oxydation de cette surface sans utilisation de gaz inertant (tel que N₂) ; ces films permettent de réduire les coûts d'inertage ;
- des films dont le but est la protection temporaire de surface lors du cycle de vie d'un produit donné (fabrication, manutention et transport, transformation, stockage) ; ces films peuvent être des polyoléfines traités corona, des films polyoléfines revêtus d'un adhésif acrylique enduit (en phase aqueuse ou solvantée), des films polyoléfines revêtus d'un adhésif caoutchouc ou encore des films obtenus par coextrusion d'une couche support à base de polyoléfine(s) et d'une couche adhésive spécifique ;
- des films permettant de conférer une brillance ou structurer une surface, par exemple des films polyesters.

Il est difficile de concilier les exigences requises pour protéger une surface : par exemple, un film adhésif sensible à la pression pour la protection de surface a une surface de contact molle et de haute brillance qui ne permet pas de structurer une surface. De même, un film PET utilisé pour de l'inertage n'est pas suffisamment souple pour accompagner les transformations mécaniques de la surface d'un produit lors de son cycle de vie.

Depuis peu, il existe des nouvelles générations de laques sans solvant, notamment des laques réticulables par photopolymérisation (par faisceau d'électron ou par des lampes UV). Lors du séchage de ces laques, il est nécessaire d'inerter l'habitacle d'irradiation, ce qui est coûteux. Ces laques peuvent être appliquées sur des rouleaux de métaux (par exemple, en acier inoxydable ou en aluminium) et nécessitent différentes teintes et états de brillance en fonction de l'application recherchée. Pour obtenir ces états de brillance, des agents, dont des agents matants, peuvent être utilisés. Ces agents ont un coût généralement plus élevé que celui de la laque et occasionnent, en fonction de leur taux, un grand nombre de références de formulations. Enfin, ces laques nécessitent d'être protégées par des films temporaires auto-adhésifs. Ces films ne sont pas adaptés pour les deux fonctions précédentes et sont obligatoires pour assurer la qualité finale du produit. Un exemple d'un tel film auto-adhésif, de type « PSA » (de l'anglais « pressure sensitive adhesive ») est décrit dans la demande de brevet US 2009/263607.

La demande DE 10 2005 055 913 décrit l'utilisation d'un film de protection auto-adhésif pour la protection de surfaces peintes non durcies par UV ou faisceau d'électrons, ledit film comprenant un support sur lequel est appliqué un adhésif sensible à la pression (« PSA ») mono- ou multicouche.

Par définition, un PSA est adhésif et a une pégosité ; la pégosité correspond à des produits de module élastique G' inférieur à 3.10⁵ Pa.

Il a été découvert, et c'est le fondement de l'invention, qu'il est possible de remédier aux inconvénients susmentionnés en utilisant un film non auto-adhésif, à base de polyoléfine, pour protéger une surface laquée.

Ainsi, selon un premier aspect, l'invention concerne un procédé pour protéger une surface laquée ou peinte non durcie, qui comprend (i) une étape d'application d'un film de protection, comprenant un support et une couche non-adhésive revêtue sur ledit support, sur ladite surface, de telle sorte que la couche non-adhésive du film soit en contact avec la surface laquée ou peinte, et (ii) une étape de réticulation de la laque ou de la peinture, ladite couche non-adhésive possédant un module élastique G' ≥ 3.10⁵ Pa, de préférence ≥ 10⁶ Pa, mesuré à 1 Hz sur une plage de température allant de 0°C à 50°C, et un angle de perte tan δ < 1, mesuré à 1 Hz sur une plage de température allant de 0 à 50°C.

La couche non-adhésive du film de protection comprend une ou plusieurs polyoléfine(s) choisie(s) parmi un polyéthylène, un caoutchouc synthétique, un copolymère d'éthylène et d'acétate de vinyle, un polypropylène, un copolymère de polypropylène et de polyéthylène ou un mélange de ces composés. Par « mélange de ces composés » on entend au sens de la présente invention un mélange de plusieurs polyoléfines du même type, ou d'une ou plusieurs polyoléfine(s) d'un premier type avec une ou plusieurs polyoléfine(s) d'un ou plusieurs autres types. De préférence, la polyoléfine est un polyéthylène ou un mélange de polyéthylènes. De manière avantageuse, la couche non-adhésive comprend au moins 50% en poids, de préférence au moins 70% en poids, de préférence encore au moins 80% en poids, et de manière particulièrement préférée au moins 85% en poids de polyoléfine(s).

La couche non-adhésive peut également comprendre un ou plusieurs additifs choisis parmi les agents matants ; les agents antibloquants ; les additifs modifiant le niveau d'adhérence de ladite couche ; et leurs mélanges. De manière avantageuse, le ou les additifs représente(nt) au plus 50% en poids, de préférence au plus 30% en poids, de préférence encore au plus 20% en poids, et de manière particulièrement préférée au plus 15% en poids de la couche non-adhésive.

Une des caractéristiques essentielles de l'invention réside dans le fait que la couche non-adhésive possède :
- d'une part, un module élastique G', mesuré à 1 Hz sur une plage de température allant de 0°C à 50°C, supérieur ou égal à 3.10⁵ Pa, de préférence supérieur ou égal à 10⁶ Pa, ;
- d'autre part, un angle de perte tan δ inférieur à 1.

La valeur requise du module élastique G' de la couche non-adhésive indique que cette couche n'est pas un PSA et confère au film de protection un caractère adhérent, c'est-à-dire que le film se maintient sur la surface à protéger sans se décoller mais sans toutefois présenter un caractère adhésif (ou « tack », défini selon le critère de Dahlquist). Le film de protection adhère par interactions de van der Waals. Le film de protection est posé sur une surface liquide (laque ou peinture), parfaitement, sans inclusion d'air. Une fois la laque (peinture) séchée, cette surface de contact parfaite est conservée. Le film de protection adhère car deux solides dans l'air adhèrent si leur surface de contact est parfaite, sans pollution ni air entre les deux (principe d'Hamaker). Cette adhérence peut être mesurée par une force de pelage.

La mesure du module élastique G' est effectuée selon la norme ISO 6721-1. Une telle mesure peut être effectuée à l'aide d'un rhéomètre à déformation imposée, comme l'appareil commercialisé sous la dénomination RDA II par la société RHEOMETRIC SCIENTIFIC (TA INSTRUMENT).

L'angle de perte tan δ est le rapport du module visqueux G" de la couche non-adhésive à son module élastique G' tel que défini ci-dessus. Le module visqueux est mesuré à 1Hz sur la même plage de température que celle utilisée pour le module élastique, selon la même norme.

L'expression « module élastique G', mesuré à 1 Hz sur une plage de température allant de 0°C à 50°C, supérieur ou égal à 3.10⁵ Pa » signifie, comme cela est bien connu de l'homme du métier, que G' possède les valeurs requises sur toute la plage de température susmentionnée, c'est-à-dire que G' ≥ 3.10⁵ Pa que la mesure soit effectuée par exemple à 0°C, 10°C, 20°C, 30°C, 40°C ou 50°C.

A titre d'exemple de polyéthylène susceptible d'être utilisé dans la couche non-adhésive de l'invention, on peut citer un polyéthylène basse densité radicalaire, un polyéthylène basse densité linéaire, un polyéthylène moyenne densité, un polyéthylène haute densité et les mélanges de ces polyéthylènes. Tous ces polyéthylènes peuvent être indifféremment de catalyse métallocène ou Ziegler-Natta.

Avantageusement, le polyéthylène basse densité radicalaire (PEbdr) a une densité, mesurée selon la norme ASTM D 1505, comprise dans la gamme de 0,910 à 0,925. Le polyéthylène moyenne densité (PEmd) a une densité, mesurée selon la norme ASTM D 1505, avantageusement comprise dans la gamme de >0,925 à 0,940. Le polyéthylène haute densité (PEhd) a une densité, mesurée selon la norme ASTM D 1505, avantageusement comprise dans la gamme de >0,940 à 0,960. Le polyéthylène basse densité linéaire (PEbdl) est un copolymère d'éthylène et d'un monomère oléfinique en C₃-C₈, tel que le propène, le butène, l'hexène, le méthylpentène ou l'octène. Avantageusement, le PEbdl a une densité, mesurée selon la norme ASTM D 1505, comprise dans la gamme de 0,850 à 0,936.

A titre d'exemple de caoutchouc synthétique susceptible d'être utilisé dans la couche non-adhésive de l'invention, on peut citer un copolymère styrène-éthylène-butylène-styrène (SEBS) ; un copolymère styrène-éthylène-propylène-styrène (SEPS) ; un copolymère styrène-butadiène-styrène (SBS) ; un copolymère styrène-isoprène-styrène (SIS) ; un SIS asymétrique, un dérivé vinylique, hydrogéné ou non, de SIS ; un copolymère styrène-isoprène-butadiène-styrène (SIBS) ; un copolymère styrène-isobutylène-styrène (SiBS) ; un copolymère éthylène-styrène (ES) ; et les mélanges de ces copolymères.

Les SEBS, les SEPS, les SBS, les SIS et les SiBS ont avantageusement un taux de styrène inférieur ou égal à 50 % en poids, de préférence compris dans la gamme de 5 à 45 % en poids ; de manière également avantageuse, ces polymères ont un taux de diblocs SEB, SEP, SB, SI, SIB ou SiB inférieur ou égal à 70 % en poids. Les ES ont avantageusement un taux de styrène compris dans la gamme de 5 à 85 % en poids, et de préférence un indice de fluidité, mesuré selon la norme ASTM 1238, compris dans la gamme de 0,1 à 40 dg/min.

Les copolymères d'éthylène et d'acétate de vinyle (EVA) susceptibles d'être utilisés dans la couche non-adhésive de l'invention ont avantageusement un taux d'acétate de vinyle inférieur ou égal à 80 % en poids, et un indice de fluidité, mesuré selon la norme ASTM 1238, compris dans la gamme de 0,1 à 40 dg/min.

Les polypropylènes ou copolymères de polypropylène et de polyéthylène susceptibles d'être utilisés dans la couche non-adhésive de l'invention ont avantageusement une densité, mesurée selon la norme ASTM D 1505, dans la gamme de 0,860 à 0,920. Ils peuvent être indifféremment de catalyse métallocène ou Ziegler-Natta.

Lorsque la couche non-adhésive comprend plusieurs polyoléfines, il n'est pas nécessaire que chaque polyoléfine possède un module élastique G' et un angle de perte tan δ répondant aux valeurs indiquées ci-dessus. La caractéristique de l'invention réside dans le fait que c'est le mélange de polyoléfines qui doit répondre à ces valeurs de G' et de tan δ.

Comme indiqué ci-dessus, la couche non-adhésive peut comprendre un ou plusieurs additifs permettant d'en modifier ou d'en ajuster le niveau d'adhérence. De tels additifs sont utilisés de manière conventionnelle dans le domaine des films de protection et comprennent notamment les polyoléfines métallocènes de densité comprise dans la gamme de 0,857 à 0,910 (dans l'hypothèse où elles ne sont pas déjà utilisées dans la composition de la couche non-adhésive), les EVA (dans l'hypothèse où ils ne sont pas déjà utilisés dans la composition de la couche non-adhésive), les copolymères d'éthylène et de dérivé acrylique (EDA), les ionomères de polyéthylène, les polyéthylènes greffés acide carboxylique.

Les EVA sont tels que définis ci-dessus.

Les EDA susceptibles d'être utilisés dans la couche non-adhésive de l'invention ont avantageusement un taux de dérivé acrylique, tel que par exemple l'acrylate de butyle et/ou l'acide (méth)acrylique, inférieur ou égal à 40 % en poids, et un indice de fluidité, mesuré selon la norme ASTM 1238, compris dans la gamme de 0,1 à 40 dg/min.

Les polyéthylènes greffés acide carboxylique susceptibles d'être utilisés dans la couche non-adhésive de l'invention ont avantageusement un taux d'acide compris dans la gamme de 2 à 20 % en poids.

Il va de soi que lorsque la couche non-adhésive comprend un ou plusieurs additifs modifiant le niveau d'adhérence, l'homme du métier ajustera la quantité de cet (ces) additif(s) de sorte à respecter les valeurs de G' et de tan δ susmentionnées. En tout état de cause, la quantité de tous les additifs présents dans la couche non-adhésive (y compris les additifs modifiant le niveau d'adhérence) ne peut pas dépasser 50% en poids du poids total de la couche.

La couche non-adhésive possède avantageusement une brillance, mesurée selon la norme ASTM2457, dans la gamme de 5 à 130, de préférence de 5 à 120. L'angle d'incidence utilisé pour effectuer la mesure dépendra du niveau de brillance du produit testé ; il est typiquement de 20°, de 60° ou de 85°. La brillance peut résulter directement de la nature de la polyoléfine utilisée (ou du mélange de polyoléfines utilisé), ou peut être ajustée par traitement chimique ou mécanique de la couche non-adhésive.

Selon un mode de réalisation de l'invention, la brillance de la couche non-adhésive est obtenue par traitement chimique. Dans ce mode de réalisation, on ajoute à la couche non-adhésive jusqu'à environ 40% en poids (par rapport au poids total de la couche) d'un ou plusieurs additifs modifiant le niveau de brillance de la couche, choisis parmi les agents matants, les agents antibloquants et leurs mélanges. On entend par « jusqu'à environ 40% en poids » une quantité d'additif(s) comprise dans la gamme de >0 à environ 40% en poids du poids de la couche. Avantageusement, on ajoute à la couche non-adhésive environ 2% à environ 25% en poids d'un ou plusieurs des additifs susmentionnés (par rapport au poids total de la couche).

Selon un autre mode de réalisation de l'invention, la brillance de la couche non-adhésive est obtenue par traitement mécanique. Selon ce mode de réalisation, on procède à une structuration mécanique de la couche à l'état fondu sur un rouleau structuré ou brillant selon des techniques bien connues de l'homme du métier.

Le film de protection est obtenu en revêtant le support avec la couche non-adhésive décrite ci-dessus. De préférence, le film de protection est obtenu par co-extrusion de la couche non-adhésive et du support, en particulier par co-extrusion coulée ou co-extrusion soufflage. Ces techniques sont bien connues de l'homme du métier, et sont décrites par exemple dans l'ouvrage « Encyclopedia of Chemical Technology » (Kirk-Othmer), 1996, volume 19, pages 290-316. Le film de protection peut également être obtenu par couchage de la couche non-adhésive sur le support.

Avantageusement, les matières utilisées pour fabriquer le film de protection sont tamisées et dépoussiérées avant l'extrusion, afin d'éliminer les poussières, peluches, granulés trop petits ou trop gros, etc., qui pourraient provoquer des défauts dans le film après extrusion.

Le support du film de protection peut être du type monocouche ou du type multicouche.

Un support de type monocouche est avantageusement composé :
- de papier, par exemple du papier couché ou enduit ; ou
- d'une polyoléfine comme par exemple un polyéthylène basse densité radicalaire ; un polyéthylène basse densité linéaire ; un polyéthylène moyenne densité ; un polyéthylène haute densité ; un mélange de ces polyéthylènes ; un polypropylène ; ou un mélange ou copolymère d'éthylène et de propylène.

Lorsque le support est de type multicouche, chaque couche est avantageusement composée d'une polyoléfine telle que définie ci-dessus pour le support de type monocouche. Le support multicouche comprend généralement 2 à 10 couches, de préférence 2 à 5 couches ; de manière avantageuse, le support multicouche comprend 2, 3 ou 4 couches.

Chaque couche du support (mono- ou multicouche) peut contenir un ou plusieurs additifs tels que des agents matants, des agents glissants, des colorants, des stabilisants UV, des barrières UV, des antioxydants. Ces additifs sont généralement présents dans chaque couche à raison d'environ 1% à environ 20 % en poids (par rapport au poids total de la couche).

L'épaisseur du film de protection est généralement comprise entre environ 10 et environ 200 µm, de préférence entre environ 20 et environ 100 µm. Le support représente généralement entre 60% et 90 % de l'épaisseur totale du film.

Le film de protection décrit ci-dessus est particulièrement adapté à la protection temporaire de surfaces laquées ou peintes non durcies.

Par « surface laquée ou peinte non durcie » on entend au sens de la présente invention que la laque ou la peinture revêtant la surface n'a pas été durcie chimiquement ou par photopolymérisation (par exemple par rayonnement UV ou par faisceau d'électrons). Les termes « laque » et « peinture » incluent tout type de liquide fonctionnalisant une surface, par exemple tout liquide conférant une teinte à une surface.

La laque ou la peinture utilisée pour revêtir (ou enduire) la surface est réticulable par photopolymérisation. De telles laques ou peintures, formulées sans solvant, sont disponibles dans le commerce.

Selon une première variante, la surface à protéger est déjà laquée ou peinte et le film de protection est directement appliqué, de préférence laminé, sur ladite surface.

Selon une deuxième variante, la surface est laquée ou peinte et protégée en une étape au moyen du film de protection ; le procédé de l'invention comprend alors les étapes suivantes :
a) enduire le film de protection avec une laque ou une peinture réticulable par photopolymérisation, de telle sorte que ladite laque ou peinture soit en contact avec la couche non-adhésive du film;
b) laminer le film ainsi enduit sur la surface.

On comprend que lors du laminage la laque (peinture) est appliquée sur la surface et que cette dernière, laquée (peinte), est alors en contact avec la couche non-adhésive du film.

La surface à protéger est généralement une surface en acier, notamment en acier inox, en aluminium ou en plastique ; de préférence la surface est en acier, en particulier en acier inox.

Dans l'une ou l'autre variante décrite ci-dessus, le procédé de l'invention peut comprendre en outre une étape de réticulation de la laque ou de la peinture après l'application du film.

Le film de protection selon l'invention possède, avant application sur la surface à protéger, une force de décollement, mesurée selon la norme AFERA 5001 (pelage à 180° et vitesse de pelage de 300 mm/min), dans la gamme de 0 à 100 cN/cm, de préférence de 0 à 50 cN/cm. Après application sur la surface à protéger, le film de protection possède une force de décollement (mesurée par dynamométrie selon un protocole adapté de la norme AFERA 5001 : pelage à 180° et vitesse de pelage de 300 mm/min) dans la gamme de 1 à 100 cN/cm, de préférence de 1 à 50 cN/cm.

Il a été constaté de manière inattendue qu'après réticulation de la laque ou de la peinture la surface possède, une fois le film de protection enlevé, un état de surface identique ou comparable, dans tous les cas de manière reproductible, à celui de la couche non-adhésive du film de protection. Les inventeurs ont mis en évidence que les propriétés de brillance, de rugosité et, le cas échéant, de structure géométrique (telle que alvéoles (sphères en creux), lignes, ou formes plus complexes avec des profondeurs entre 1 et 100 µm et des largeurs entre 0,1 et 2 mm) de la couche non-adhésive sont transférées à la surface laquée ou peinte. En particulier, la surface laquée ou peinte possède, après réticulation :
- une brillance, mesurée selon la norme ASTM2457, dans la gamme de 5 à 120, de préférence dans la gamme de 5 à 90 ;
- une rugosité R_{A}, mesurée selon la norme ISO 13565-2, dans la gamme de 0,1 à 5 µm ;
- une rugosité R_{Z}, mesurée selon la norme ISO 13565-2, dans la gamme de 0,1 à 25 µm.

Ainsi, selon un second aspect, l'invention concerne un procédé pour conférer une brillance de 5 à 120, de préférence de 5 à 90, mesurée selon la norme ASTM2457, à une surface laquée ou peinte au moyen d'une laque ou peinture, réticulable par photopolymérisation, non durcie, qui comprend les étapes suivantes :
a) laminer un film de protection tel que défini ci-dessus sur la surface ; et
b) réticuler la laque ou la peinture.

Dans une variante de ce second aspect, la surface est laquée ou peinte et protégée en une étape au moyen du film de protection, et le procédé comprend alors les étapes suivantes :
a) enduire le film de protection avec une laque ou une peinture réticulable par photopolymérisation, de telle sorte que ladite laque ou peinture soit en contact avec la couche non-adhésive du film ;
b) laminer le film ainsi enduit sur la surface ; et
c) réticuler la laque ou la peinture.

Les deux variantes du procédé selon le second aspect de l'invention peuvent être mises en oeuvre comme indiqué ci-dessus en référence au premier aspect de l'invention.

Selon un mode de réalisation du premier et du deuxième aspect de l'invention, on applique sur la surface à protéger un film monocouche sans support. Ce film monocouche est constitué essentiellement de la couche non-adhésive décrite pour le premier aspect de l'invention à laquelle on peut ajouter un ou plusieurs additifs tels que des agents matants, des agents glissants, des colorants, des stabilisants UV, des barrières UV, des antioxydants. Ces additifs sont généralement présents à raison d'environ 1% à environ 20 % en poids (rapporté au poids de la couche non-adhésive).

Le film de protection, une fois appliqué sur la surface, protège la laque ou la peinture des attaques de l'oxygène lors de son durcissement, et peut également accompagner et protéger la surface laquée ou peinte lors de son cycle de vie, incluant des transformations mécaniques telle que le profilage ou le pliage, des risques de modification de son état de surface (salissures, rayures) et des risques de modifications de ses performances (par photodégradation).

Le film de protection remplit donc une triple action puisqu'il permet la protection de surfaces laquées ou peintes et la prévention de l'oxydation de telles surfaces sans utilisation de gaz inertant, et que les surfaces présentent, après enlèvement du film, un état de surface identique ou comparable à celui de la couche non-adhésive du film.

L'invention est illustrée par les exemples ci-après, donnés à titre purement indicatif.

### Exemple 1

On a préparé par extrusion soufflage un film 3 couches d'épaisseur 50 µm composé d'un support bicouche et d'une couche non-adhésive.

Le support bicouche comprend :
- une couche constituée à 100% de PEbdr (densité = 0,926, ExxonMobil LD156BW), cette couche représentant 20% en poids du film ;
- une couche contenant 95% en poids de PEbdr (densité = 0,926, ExxonMobil LD156BW) et 5% en poids d'un stabilisant UV de type HALS (de l'anglais 'hindered amine light stabilizer') commercialisé par la société A. Schulman sous la dénomination Polybatch® UV1952, cette couche représentant 60% en poids du film.

La couche non-adhésive, représentant 20% en poids du film, contient 85% en poids de PEbdr (densité = 0,926, ExxonMobil LD156BW) et 15% en poids d'un agent antibloquant à base de silice, commercialisé par la société POLYTECHS sous la dénomination AB PE 50N ; cette couche, qui possède une brillance (60°), mesurée selon la norme ASTM2457, égale à 25, est en contact avec la couche la plus épaisse du support. Le module G' de la couche non-adhésive est > 3.10⁵ Pa et sa tan delta est <1 entre 0 et 50°C.

Ce film possède une force de décollement initiale et après vieillissement en étuve pendant 20 min à 100°C de 5 à 30 cN/cm (mesure par dynamomètre de type Instron à 300 mm/min et 180°, protocole adapté de la norme AFERA 5001), et confère à la surface protégée (plaque d'acier de 1mm dégraissée, revêtue d'un apprêt et d'une laque liquide de référence NT960EB provenant de chez Beckers) une brillance (60°) de 25 après réticulation par faisceau d'électrons.

### Exemple 2

On a préparé par extrusion soufflage un film 3 couches d'épaisseur 40 µm composé d'un support bicouche et d'une couche non-adhésive.

Le support bicouche comprend :
- une couche constituée à 100% de PEbdr (densité = 0,926, ExxonMobil LD156BW), cette couche représentant 20% en poids du film ;
- une couche contenant 95% en poids de PEbdr (densité = 0,926, ExxonMobil LD156BW) et 5% en poids d'un stabilisant UV de type HALS commercialisé par la société A. Schulman sous la dénomination Polybatch® UV1952, cette couche représentant 60% en poids du film.

La couche non-adhésive, représentant 20% en poids du film, est constituée à 100% d'un polyéthylène radicalaire commercialisé par la société LyondellBasell sous la dénomination Lupolen 3020 F (densité = 0,927) ; cette couche, qui possède une brillance (60°), mesurée selon la norme ASTM2457, égale à 115, est en contact avec la couche la plus épaisse du support. Le module G' de la couche non-adhésive est > 3.10⁵ Pa et sa tan delta est <1 entre 0 et 50°C.

Ce film possède une force de décollement initiale et après vieillissement en étuve pendant 20 min à 100°C de 5 à 30 cN/cm (mesure par dynamomètre de type Instron à 300 mm/min et 180°, protocole adapté de la norme AFERA 5001), et confère à la surface protégée (plaque d'acier de 1mm dégraissée, revêtue d'un apprêt et d'une laque liquide de référence NT960EB provenant de chez Beckers) une brillance (60°) de 84 après réticulation par faisceau d'électrons.

### Exemple 3

On a préparé par extrusion soufflage un film 3 couches d'épaisseur 50 µm composé d'un support bicouche et d'une couche non-adhésive.

Le support bicouche comprend :
- une couche constituée à 100% de PEbdr (densité = 0,926, ExxonMobil LD156BW), cette couche représentant 20% en poids du film ;
- une couche contenant 95% en poids de PEbdr (densité = 0,926, ExxonMobil LD156BW) et 5% en poids d'un stabilisant UV de type HALS commercialisé par la société A. Schulman sous la dénomination Polybatch® UV1952, cette couche représentant 60% en poids du film.

La couche non-adhésive, représentant 20% en poids du film, contient 50% en poids de PEbdr (densité = 0,926, ExxonMobil LD156BW), 44% en poids de PEbdl (d = 0,858) commercialisé par la société Dow sous la dénomination Engage®8842, et 6% en poids d'un agent antibloquant à base de silice, commercialisé par la société POLYTECHS sous la dénomination AB PE 50N ; cette couche, qui possède une brillance (60°), mesurée selon la norme ASTM2457, égale à 66, est en contact avec la couche la plus épaisse du support. Le module G' de la couche non-adhésive est > 3.10⁵ Pa et sa tan delta est <1 entre 0 et 50°C.

Ce film possède une force de décollement initiale et après vieillissement en étuve pendant 20 min à 100°C de 5 à 70 cN/cm (mesure par dynamomètre de type Instron à 300 mm/min et 180°, protocole adapté de la norme AFERA 5001), et confère à la surface protégée (plaque d'acier de 1mm dégraissée, revêtue d'un apprêt et d'une laque liquide de référence NT960EB provenant de chez Beckers) une brillance (60°) de 48 après réticulation par faisceau d'électrons.

### Exemple 4

On a préparé par extrusion soufflage un film 3 couches d'épaisseur 50 µm composé d'un support bicouche et d'une couche non-adhésive.
Le support bicouche comprend :
- une couche constituée à 100% de PEbdr (densité = 0,926, ExxonMobil LD156BW), cette couche représentant 20% en poids du film ;
- une couche contenant 95% en poids de PEbdr (densité = 0,926, ExxonMobil LD156BW) et 5% en poids d'un stabilisant UV de type HALS commercialisé par la société A. Schulman sous la dénomination Polybatch® UV1952, cette couche représentant 60% en poids du film.

La couche non-adhésive, représentant 20% en poids du film, est constituée à 100% de polyéthylène linéaire (densité = 0,923, Borstar FB2230 de Boréalis) ; cette couche, qui possède une brillance (60°), mesurée selon la norme ASTM2457, égale à 13, est en contact avec la couche la plus épaisse du support. Le module G' de la couche non-adhésive est > 3.10⁵ Pa et sa tan delta est <1 entre 0 et 50°C.

Ce film possède une force de décollement initiale et après vieillissement en étuve pendant 20 min à 100°C de 5 à 30 cN/cm (mesure par dynamomètre de type Instron à 300 mm/min et 180°, protocole adapté de la norme AFERA 5001), et confère à la surface protégée (plaque d'acier de 1mm dégraissée, revêtue d'un apprêt et d'une laque liquide de référence NT960EB provenant de chez Beckers) une brillance (60°) de 8 après réticulation par faisceau d'électrons.

### Exemple 5

On a préparé par extrusion soufflage un film 5 couches d'épaisseur 50 µm composé d'un support quadricouche et d'une couche non-adhésive.

Le support quadricouche comprend :
- trois couches constituées à 100% de PEbdr (densité = 0,926, ExxonMobil LD156BW), représentant respectivement 5%, 15% et 60% en poids du film ;
- une couche contenant 95% en poids de PEbdr (densité = 0,926, ExxonMobil LD156BW) et 5% en poids d'un stabilisant UV de type HALS (de l'anglais 'hindered amine light stabilizer') commercialisé par la société A. Schulman sous la dénomination Polybatch® UV1952, cette couche représentant 15% en poids du film.

La couche non-adhésive, représentant 5% en poids du film, contient 85% en poids de PEbdr (densité = 0,926, ExxonMobil LD156BW) et 15% en poids d'un agent antibloquant à base de silice, commercialisé par la société POLYTECHS sous la dénomination AB PE 50N ; cette couche, qui possède une brillance (60°), mesurée selon la norme ASTM2457, égale à 28 est en contact avec la couche la plus épaisse du support. Le module G' de la couche non-adhésive est > 3.10⁵ Pa et sa tan delta est <1 entre 0 et 50°C.

Ce film possède une force de décollement initiale et après vieillissement en étuve pendant 20 min à 100°C de 5 à 30 cN/cm (mesure par dynamomètre de type Instron à 300 mm/min et 180°, protocole adapté de la norme AFERA 5001), et confère à la surface protégée (plaque d'acier de 1mm dégraissée, revêtue d'un apprêt et d'une laque liquide de référence NT960EB provenant de chez Beckers) une brillance (60°) de 28 après réticulation par faisceau d'électrons.

### Exemple 6

On a préparé par extrusion soufflage un film blanc 3 couches d'épaisseur 80 µm composé d'un support bicouche et d'une couche non-adhésive.

Le support bicouche comprend :
- une couche constituée à 100% de PEbdr (densité = 0,926, ExxonMobil LD156BW), cette couche représentant 20% en poids du film ;
- une couche contenant 80% en poids de PEbdr (densité = 0,926, ExxonMobil LD156BW) et 20% en poids d'un agent de matage commercialisé par la société A. Schulman sous la dénomination Polywhite® NG8250, cette couche représentant 60% en poids du film.

La couche non-adhésive, représentant 20% en poids du film, contient 85% en poids de PEbdr (densité = 0,926, ExxonMobil LD156BW) et 15% en poids d'un agent antibloquant à base de silice, commercialisé par la société POLYTECHS sous la dénomination AB PE 50N ; cette couche, qui possède une brillance (60°), mesurée selon la norme ASTM2457, égale à 30, est en contact avec la couche la plus épaisse du support. Le module G' de la couche non-adhésive est > 3.10⁵ Pa et sa tan delta est <1 entre 0 et 50°C.

Ce film possède une force de décollement initiale et après vieillissement en étuve pendant 20 min à 100°C de 5 à 30 cN/cm (mesure par dynamomètre de type Instron à 300 mm/min et 180°, protocole adapté de la norme AFERA 5001), et confère à la surface protégée (plaque d'acier de 1mm dégraissée, revêtue d'un apprêt et d'une laque liquide de référence NT960EB provenant de chez Beckers) une brillance (60°) de 30 après réticulation par faisceau d'électrons.

### Exemple 7

On a préparé par extrusion soufflage un film blanc 3 couches d'épaisseur 80 µm composé d'un support bicouche et d'une couche non-adhésive.

Le support bicouche comprend :
- une couche constituée à 100% de PEbdr (densité = 0,926, ExxonMobil LD156BW), cette couche représentant 20% en poids du film ;
- une couche contenant 80% en poids de PEbdr (densité = 0,926, ExxonMobil LD156BW) et 20% en poids d'un agent de matage commercialisé par la société A. Schulman sous la dénomination Polywhite® NG8250, cette couche représentant 60% en poids du film.

La couche non-adhésive, représentant 20% en poids du film, contient 50% en poids d'un polyéthylène radicalaire commercialisé par la société LyondellBasell sous la dénomination Lupolen 3020 F (densité = 0,927) et 50% en poids d'un copolymère propylène-éthylène commercialisé par la société Dow Chemical Company sous la dénomination Versify 2300 (densité = 0,867) ; cette couche, qui possède une brillance (60°), mesurée selon la norme ASTM2457, égale à 62, est en contact avec la couche la plus épaisse du support. Le module G' de la couche non-adhésive est > 3.10⁵ Pa et sa tan delta est <1 entre 0 et 50°C.

Ce film possède une force de décollement initiale et après vieillissement en étuve pendant 20 min à 100°C de 5 à 30 cN/cm (mesure par dynamomètre de type Instron à 300 mm/min et 180°, protocole adapté de la norme AFERA 5001), et confère à la surface protégée (plaque d'acier de 1mm dégraissée, revêtue d'un apprêt et d'une laque liquide de référence NT960EB provenant de chez Beckers) une brillance (60°) de 61 après réticulation par faisceau d'électrons.

### Exemple 8

On a préparé par extrusion soufflage un film blanc 3 couches d'épaisseur 80 µm composé d'un support bicouche et d'une couche non-adhésive.

Le support bicouche comprend :
- une couche constituée à 100% de PEbdr (densité = 0,926, ExxonMobil LD156BW), cette couche représentant 20% en poids du film ;
- une couche contenant 80% en poids de PEbdr (densité = 0,926, ExxonMobil LD156BW) et 20% en poids d'un agent de matage commercialisé par la société A. Schulman sous la dénomination Polywhite® NG8250, cette couche représentant 60% en poids du film.

La couche non-adhésive, représentant 20% en poids du film, contient 74% en poids d'un polyéthylène radicalaire commercialisé par la société LyondellBasell sous la dénomination Lupolen 3020 F (densité = 0,927), 20% en poids d'un caoutchouc synthétique, un copolymère styrène-éthylène-butylène commercialisé par la société Kraton Polymers sous la dénomination Kraton G1645 (densité = 0,90), et 6% en poids d'un agent antibloquant à base de silice, commercialisé par la société POLYTECHS sous la dénomination AB PE 50N ; cette couche, qui possède une brillance (60°), mesurée selon la norme ASTM2457, égale à 54, est en contact avec la couche la plus épaisse du support. Le module G' de la couche non-adhésive est > 3.10⁵ Pa et sa tan delta est <1 entre 0 et 50°C.

Ce film possède une force de décollement initiale et après vieillissement en étuve pendant 20 min à 100°C de 5 à 30 cN/cm (mesure par dynamomètre de type Instron à 300 mm/min et 180°, protocole adapté de la norme AFERA 5001), et confère à la surface protégée (plaque d'acier de 1mm dégraissée, revêtue d'un apprêt et d'une laque liquide de référence NT960EB provenant de chez Beckers) une brillance (60°) de 55 après réticulation par faisceau d'électrons.

## Revendications

1. Procédé pour protéger une surface laquée ou peinte avec une laque ou peinture, réticulable par polymérisation, non durcie, qui comprend (i) le laminage d'un film de protection, comprenant un support revêtu d'une couche non-adhésive, sur ladite surface de telle sorte que la couche non-adhésive dudit film soit en contact avec la surface, et (ii) la réticulation de la laque ou de la peinture,
ladite couche non-adhésive comprenant au moins 50% en poids d'une ou plusieurs polyoléfine(s) choisie(s) parmi un polyéthylène, un caoutchouc synthétique, un copolymère d'éthylène et d'acétate de vinyle, un polypropylène, un copolymère de polypropylène et de polyéthylène, ou un mélange de ces composés,
et ladite couche non-adhésive possédant :
- un module élastique G' ≥ 3.10⁵ Pa, mesuré à 1 Hz sur une plage de température allant de 0°C à 50°C ; et
- un angle de perte tan δ < 1, où tan δ = G"/G', G" étant le module visqueux de la couche non-adhésive mesuré à 1Hz sur une plage de température allant de 0°C à 50°C ;
ledit film de protection possédant, avant application sur la surface laquée ou peinte, une force de décollement, mesurée selon la norme AFERA 5001 (pelage à 180° et vitesse de pelage de 300 mm/min), dans la gamme allant de 0 à 100 cN/cm, et après application sur la surface laquée ou peinte, une force de décollement, mesurée par dynamométrie (pelage à 180° et vitesse de pelage de 300 mm/min), dans la gamme allant de 1 à 100 cN/cm.

2. Procédé selon la revendication 1, dans lequel la couche non-adhésive du film de protection comprend au moins 50% en poids d'un polyéthylène choisi parmi un polyéthylène basse densité radicalaire, un polyéthylène basse densité linéaire, un polyéthylène moyenne densité, un polyéthylène haute densité et les mélanges de ces polyéthylènes.

3. Procédé selon la revendication 1 ou la revendication 2, dans lequel la couche non-adhésive du film de protection comprend également un ou plusieurs additifs choisis parmi les agents matants ; les agents antibloquants ; les additifs modifiant le niveau d'adhérence de ladite couche ; et leurs mélanges.

4. Procédé selon l'une des revendications 1 à 3, dans lequel la couche non-adhésive du film de protection possède une brillance, mesurée selon la norme ASTM2457, dans la gamme de 5 à 130, de préférence dans la gamme de 5 à 120.

5. Procédé selon l'une des revendications 1 à 4, dans lequel le support du film de protection est du type monocouche ou du type multicouche.

6. Procédé selon la revendication 5, dans lequel le support du film de protection est de type multicouche, et comprend au plus 10 couches, de préférence au plus 5 couches.

7. Procédé selon l'une des revendications 1 à 6, dans lequel le film de protection possède, avant application sur la surface laquée ou peinte, une force de décollement, mesurée selon la norme AFERA 5001 (pelage à 180° et vitesse de pelage de 300 mm/min), dans la gamme allant de 0 à 50 cN/cm, et après application sur la surface laquée ou peinte, une force de décollement, mesurée par dynamométrie (pelage à 180° et vitesse de pelage de 300 mm/min), dans la gamme allant de 1 à 50 cN/cm.

8. Procédé selon l'une des revendications 1 à 7, dans lequel le film de protection est un film co-extrudé.

9. Procédé selon l'une des revendications 1 à 8, qui comprend les étapes suivantes :
a) enduire le film de protection avec une laque ou une peinture réticulable par photopolymérisation, de telle sorte que ladite laque ou peinture soit en contact avec la couche non-adhésive du film;
b) laminer le film ainsi enduit sur la surface.

10. Procédé selon l'une des revendications 1 à 9, dans lequel la surface à protéger est une surface en acier, notamment en acier inox, en aluminium ou en plastique.

11. Procédé pour conférer une brillance de 5 à 90, mesurée selon la norme ASTM2457, à une surface laquée ou peinte au moyen d'une laque ou peinture, réticulable par photopolymérisation, non durcie, lequel procédé comprend la mise en oeuvre du procédé défini dans l'une quelconque des revendications 1 à 10.

## Patentansprüche

1. Verfahren zum Schützen einer lackierten oder bemalten Oberfläche mit einem/einer durch Polymerisation vernetzbaren, nicht gehärteten Lack oder Farbe, umfassend das (i) Laminieren eines Schutzfilms, der einen Träger, der mit einer nicht klebenden Schicht beschichtet ist aufweist, auf die Oberfläche, derart, dass die nicht klebende Schicht des Films in Kontakt mit der Oberfläche ist, und (ii) Vernetzen des Lackes oder der Farbe,
wobei die nicht klebende Schicht mindestens 50 Gew.-% eines oder mehrerer Polyolefine umfasst, das (die) ausgewählt wird (werden) aus einem Polyethylen, einem synthetischen Kautschuk, einem Ethylen-Vinylacetat-Copolymer, einem Polypropylen, einem Polypropylen-Polyethylen-Copolymer oder einer Mischung dieser Verbindungen,
und wobei die nicht klebende Schicht aufweist:
- ein Elastizitätsmodul G' ≥ 3.10⁵ Pa, gemessen bei 1 Hz über einen Temperaturbereich von 0 °C bis 50 °C und
- einen Verlustwinkel tan δ < 1 mit tan δ = G"/G ', wobei G" das Viskositätsmodul der nicht klebenden Schicht, gemessen bei 1Hz über einen Temperaturbereich von 0 °C bis 50 °C ist,
wobei der Schutzfilm vor dem Aufbringen auf die lackierte oder bemalte Oberfläche eine Abschälkraft, gemessen nach der Norm AFERA 5001 (Abschälwinkel von 180° und Abschälgeschwindigkeit von 300 mm/min), im Bereich von 0 bis 100 cN/cm und nach dem Aufbringen auf die lackierte oder bemalte Oberfläche eine Abschälkraft, gemessen durch Dynamometrie (Abschälwinkel von 180° und Abschälgeschwindigkeit von 300 mm/min), im Bereich von 1 bis 100 cN/cm besitzt.

2. Verfahren gemäß Anspruch 1, wobei die nicht klebende Schicht des Schutzfilms mindestens 50 Gew.-% eines Polyethylens umfasst, das ausgewählt wird aus einem radikalisch hergestellten Polyethylen niedriger Dichte, einem linearen Polyethylen niedriger Dichte, einem Polyethylen mittlerer Dichte, einem Polyethylen hoher Dichte und den Mischungen dieser Polyethylene.

3. Verfahren gemäß Anspruch 1 oder 2, wobei die nicht klebende Schicht des Schutzfilms auch einen oder mehrere Zusatzstoffe umfasst, die ausgewählt werden aus den Mattierungsmitteln, den Antiblockmitteln, den Zusatzstoffen, die das Haftungsniveau der Schicht ändern, und ihren Mischungen.

4. Verfahren gemäß einem der Ansprüche 1 bis 3, wobei die nicht klebende Schicht des Schutzfilms einen Glanz, gemessen nach der Norm ASTM2457, im Bereich von 5 bis 130, vorzugsweise im Bereich von 5 bis 120 besitzt.

5. Verfahren gemäß einem der Ansprüche 1 bis 4, wobei der Träger des Schutzfilms des einschichtigen Typs oder des mehrschichtigen Typs ist.

6. Verfahren gemäß Anspruch 5, wobei der Träger des Schutzfilms des mehrschichtigen Typs ist und höchstens 10 Schichten, vorzugsweise höchstens 5 Schichten aufweist.

7. Verfahren gemäß einem der Ansprüche 1 bis 6, wobei der Schutzfilm vor dem Aufbringen auf die lackierte oder bemalte Oberfläche eine Abschälkraft, gemessen nach der Norm AFERA 5001 (Abschälwinkel von 180° und Abschälgeschwindigkeit von 300 mm/min), im Bereich von 0 bis 50 cN/cm und nach dem Aufbringen auf die lackierte oder bemalte Oberfläche eine Abschälkraft, gemessen durch Dynamometrie (Abschälwinkel von 180° und Abschälgeschwindigkeit von 300 mm/min), im Bereich von 1 bis 50 cN/cm besitzt.

8. Verfahren gemäß einem der Ansprüche 1 bis 7, wobei der Schutzfilm ein koextrudierter Film ist.

9. Verfahren gemäß einem der Ansprüche 1 bis 8, das die folgenden Schritte aufweist:
a) Beschichten des Schutzfilms mit einem/einer durch Photopolymerisation vernetzbaren Lack oder Farbe derart, dass der Lack oder die Farbe in Kontakt mit der nicht klebenden Schicht der Folie ist,
b) Laminieren des auf diese Weise beschichteten Films auf die Oberfläche.

10. Verfahren gemäß einem der Ansprüche 1 bis 9, wobei die zu schützende Oberfläche eine Oberfläche aus Stahl, insbesondere aus Edelstahl, aus Aluminium oder aus Kunststoff ist.

11. Verfahren, um einer lackierten oder bemalten Oberfläche mit Hilfe von einem/einer durch Photopolymerisation vernetzbaren, nicht gehärteten Lack oder Farbe einen Glanz von 5 bis 90 gemessen nach der Norm ASTM2457 zu verleihen, wobei das Verfahren das Umsetzen des Verfahrens aufweist, das in einem der Ansprüche 1 bis 10 definiert ist.

## Claims

1. A method for protecting a lacquered or painted surface with a lacquer or a paint, which lacquer or paint is crosslinkable by polymerization and not cured, which comprises (i) laminating a protection film, comprising a support coated with a non-adhesive layer, on said surface such that the non-adhesive layer of the film is in contact with the surface and (ii) crosslinking the lacquer or the paint,
said non-adhesive layer comprising at least 50% by weight of one or several polyolefin(s) selected from a polyethylene, a synthetic rubber, an ethylene-vinyl acetate copolymer, a polypropylene, a copolymer of polypropylene and polyethylene, and mixtures of these compounds,
and said non-adhesive layer having:
- an elastic modulus G' ≥ 3.10⁵ Pa, measured at 1 Hz over a temperature range of from 0°C to 50°C; and
- a loss angle tan δ < 1, where tan δ = G"/G', G" being the viscous modulus of the non-adhesive layer measured at 1 Hz over a temperature range of from 0°C to 50°C;
said protection film having, before application onto the lacquered or painted surface, a peel force, measured according to the AFERA 5001 standard (180° peel and peel rate of 300 mm/min), in the range of 0 to 100 cN/cm, and, after application onto the lacquered or painted surface, a peel force, measured by tensile testing (180° peel and peel rate of 300 mm/min), in the range of 1 to 100 cN/cm.

2. The method of claim 1, wherein the non-adhesive layer of the protection film comprises at least 50% by weight of a polyethylene selected from a radical low density polyethylene, a linear low density polyethylene, a medium density polyethylene, a high density polyethylene and mixtures of these polyethylenes.

3. The method of claim 1 or claim 2, wherein the non-adhesive layer of the protection film also comprises one or more additives selected from matting agents, anti-blocking agents; additives that modify the degree of adhesion of said layer, and mixtures thereof.

4. The method of any of claims 1 to 3, wherein the non-adhesive layer of the protection film has a gloss, measured according to the ASTM2457 standard, in the range from 5 to 130, preferably in the range from 5 to 120.

5. The method of any of claims 1 to 4, wherein the support of the protection film is of monolayer type or of multilayer type.

6. The method of claim 5, wherein the support of the protection film is of multilayer type, and comprises at most 10 layers, preferably at most 5 layers.

7. The method of any of claims 1 to 6, wherein the protection film has, before application onto the lacquered or painted surface, a peel force, measured according to the AFERA 5001 standard (180° peel and peel rate of 300 mm/min), in the range of 0 to 50 cN/cm, and, after application onto the lacquered or painted surface, a peel force, measured by tensile testing (180° peel and peel rate of 300 mm/min), in the range of 1 to 50 cN/cm

8. The method of any of claims 1 to 7, wherein the protection film is a coextruded film.

9. The method of any of claims 1 to 8, comprising the following steps:
a) coating the protection film with a lacquer or a paint that is crosslinkable by photopolymerization, such that said lacquer or paint is in contact with the non-adhesive layer of the film;
b) laminating the film thus coated onto the surface.

10. The method of any of claims 1 to 9, wherein the surface to be protected is a steel surface, in particular a stainless steel surface, an aluminum surface or a plastics surface.

11. A method for imparting a gloss of 5 to 90, measured according to the ASTM2457 standard, to surface lacquered or painted with a lacquer or a paint, which lacquer or paint is crosslinkable by photopolymerization and not cured, which method comprises implementing the method of any one of claims 1 to 10.
